# EUROPÄISCHE PATENTANMELDUNG

(11) **EP 4 819 438 A2**
(43) Veröffentlichungstag der Anmeldung: **07.10.2026**
(21) Anmeldenummer: 26157840.5
(22) Anmeldetag: 11.02.2026
(51) Int. Cl.: H02J 7/14, B60L 1/00, B60L 1/02, B60L 50/61, B60L 53/10, B60L 53/24, B60L 58/13, B60L 58/24, B60L 58/25, B60L 58/26, B60L 58/27, B60W 10/08, B60W 10/26, B60W 20/13, B60W 20/15, B60L 50/62, B60W 10/06, B60W 50/00

(54) **AUFLADEN EINER HYBRIDMOBILKRANBATTERIE WÄHREND DER FAHRT**

(30) Priorität: 04.04.2025 DE 102025113379
(71) Anmelder: Manitowoc Crane Group France SAS, 69574 Dardilly Cedex (FR)
(72) Erfinder: KRUG, Andreas, 26125 Oldenburg (DE)
(74) Vertreter: SSM Sandmair

(57) **Zusammenfassung**

Die vorliegende Erfindung umfasst ein Verfahren zum Aufladen einer Batterie eines Mobilkrans im Fahrbetrieb des Mobilkrans, wobei der Mobilkran einen Verbrennungsmotor aufweist, dessen Energie zum Antrieb des Mobilkrans und zum Laden der Batterie des Mobilkrans mittels eines Generators verwendet wird, dadurch kennzeichnet, dass der gewünschte Ladezustand (SoC) der Batterie bei Ankunft des Mobilkrans am Zielort vorgegeben wird und die Ladeleistung, welche vom Verbrennungsmotor für das Laden der Batterie benötigt wird, so berechnet und dem Generator zur Verfügung gestellt wird, dass die Batterie ausgehend von ihrem momentanen Ladezustand so aufgeladen werden kann, dass der gewünschte Ladezustand der Batterie bei der berechneten Ankunftszeit des Mobilkrans vorliegt.

## Beschreibung

Die Erfindung betrifft einen Kran, zum Beispiel einen Mobilkran, mit mindestens einem elektrischen Antrieb, sowie dessen mögliche Betriebsarten. Die elektrische Energie zum Betreiben des mindestens einen elektrischen Antriebs kann zum Beispiel aus einer oder mehreren im oder am Kran mitgeführten Batterien gewonnen werden, welche auf unterschiedliche Arten geladen werden können.

Beispielsweise kann in einem Elektro- und Hybridkran eine HV-Batterie (Hochvolt-Batterie) vorgesehen sein, welche eine leistungsstarke, wiederaufladbare Batterie mit einer Spannung von zum Beispiel über 60 Volt, beispielsweise auch 200 V bis über 800 V, sein kann. Die HV-Batterie kann als Hauptenergiequelle für den elektrischen Antrieb dienen und kann Energie speichern, zum Beispiel für den Fahrbetrieb und Arbeitsbetrieb des Mobilkrans. Hierbei kann es sich beispielsweise um eine Lithium-Ionen-Batterie handeln.

Die HV-Batterie kann durch ein Thermomanagementsystem gekühlt oder erwärmt werden, um diese vor Überhitzung zu schützen und im Bereich optimaler Betriebstemperaturen zu halten.

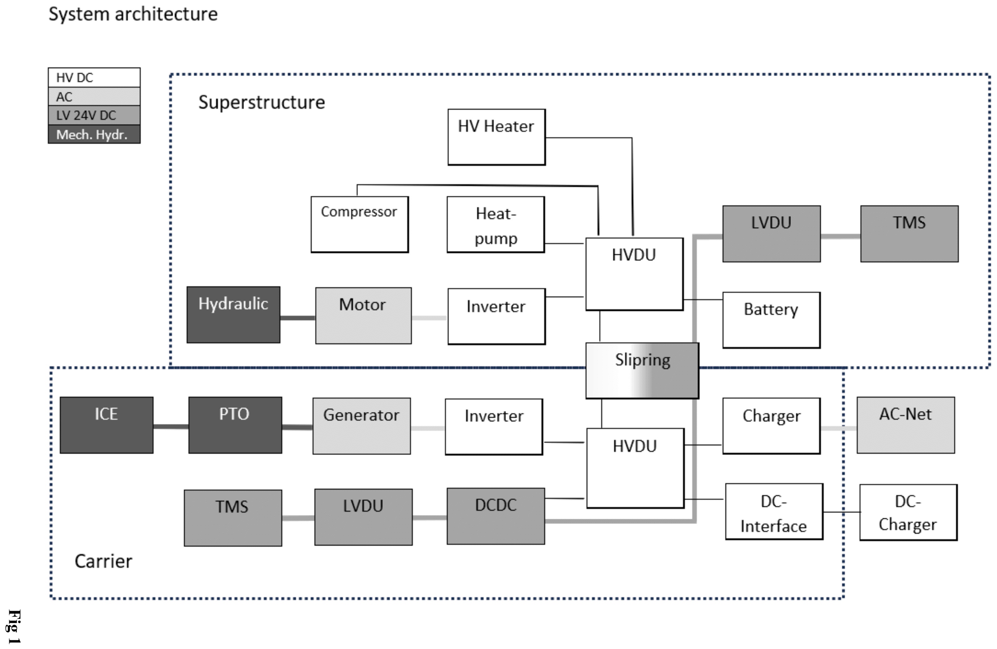

Eine beispielhafte Systemarchitektur eines Mobilkrans ist in Figur 1 gezeigt, in welcher die HV-Batterie mit "Battery" bezeichnet ist.

Eine oder mehrere zum Beispiel im Mobilkran vorgesehene Niedervolt (LV, Low Voltage)-Batterien (Spannung von bis zu 60 Volt, z.B. 12V, 24V oder 48V; nicht in Fig. 1 gezeigt) können von der wie oben beschriebenen HV-Batterie, welche extern oder intern aufgeladen wurde, geladen werden. Die wiederaufladbaren Niedervolt-Batterie(n) können im Mobilkran zum Beispiel für die Bordnetzversorgung, Versorgung anderer elektrischer Verbraucher wie Beleuchtung, Steuergeräte und elektrische Servosysteme, oder Start eines Verbrennungsmotors verwendet werden. Insofern hierin auf eine (allgemeine) Batterie Bezug genommen wird, handelt es sich um die oben beschriebene HV - Batterie, sofern nicht anders angegeben.

### 1. Betriebsarten zum Laden der HV-Batterie

Die HV-Batterie kann von extern, also mittels eines externen Stromanschlusses oder einer externen Stromversorgung, geladen werden. Alternativ oder ergänzend kann die HV-Batterie mit einem zum Beispiel im Mobilkran mitgeführten Generator, also intern, geladen werden. Beispielsweise können nachfolgend beschriebene Lademöglichkeiten verwendet werden.

### 1.1.Laden von externer Quelle

Ein externer Stromanschluss zum Laden der HV-Batterie des Mobilkrans kann beispielsweise ein Wechselstrom(AC)- oder Gleichstrom(DC)-Stromanschluss sein, welcher beispielsweise mit einem Stromnetz verbunden ist oder von einem externen Generator gespeist wird. Üblicherweise wird die Wechselstromaufladung bei geringerer Leistung durchgeführt, so dass die Wechselstromaufladung insgesamt langsamer ist als die Aufladung bei Gleichstrom, bei welcher eine höhere Leistung verwendet wird und ein höherer Strom von zum Beispiel über 200A oder 300A fließt, was eine vergleichsweise schnellere Aufladung ermöglicht.

Eine **Wechselstrom-Aufladung** kann beispielsweise dreiphasig bei 400 V mit 32 A oder 64A erfolgen (übliche Stecker: IEC 62196-2 und -3 (AC Type 2), optional SAE 3068 (AC Type 2)).

Die Batterie(n) des Kranes können zum Beispiel stationär von einer externen Wechselstromquelle (AC-net) über ein internes (optionales) Ladegerät (OBC, on-board-charger) des Mobilkrans geladen werden. Dabei kann eine Bedienperson (Operator) zum Beispiel den maximalen Ladestrom einstellen, welcher für das verfügbare Stromnetz sowie die Batterie geeignet ist. Übliche Werte diese maximalen Ladestromes liegen im Bereich von 1 bis 64A. Eine Bedienperson kann auch ein Limit oder eine Begrenzung für den maximalen Ladezustand (max % AC) SoC (State of Charge) vorgeben, um die Batterie zu schützen und deren Lebensdauer zu verlängern. Diese Daten oder Vorgaben können von einer Steuerung des Ladegeräts beim Laden der Batterie berücksichtigt werden.

Eine **Gleichstrom-Aufladung** kann beispielsweise bei bis zu 800 V mit bis zu 200 A oder 300A erfolgen (übliche Stecker: IEC 62196-2 und -3 (DC Type 2), optional SAE 3068 (DC Type 2)).

Die Batterie(n) des Kranes können zum Beispiel stationär von einer externen Gleichstromquelle (DC-charger) über ein internes Ladeinterface (DC-Interface) des Mobilkrans geladen werden. Dabei kann das Ladeinterface zum Beispiel mit der externen Ladevorrichtung kommunizieren, wobei die externe Ladevorrichtung beispielsweise die Sicherheitsüberwachung, wie zum Beispiel eine Isolationsmessung etc., durchführen kann.

Zur Pflege oder Schonung der HV-Batterie und zur Verbesserung der Gesamtlebensdauer kann der Ladezustand der HV-Batterie zum Beispiel mittels eines Batterie-Management-Systems so eingestellt werden, dass die HV-Batterie nie vollständig entladen wird (0 %) und nie vollständig aufgeladen (100 %) wird, dass also zum Beispiel ein Ladezustand der Batterie so eingestellt wird, dass dieser immer zwischen einem Mindest- und einem Höchst-Ladezustand liegt, wie zum Beispiel zwischen 5 % und 95 % der maximalen HV-Batterie-Ladung. Dabei kann zum Beispiel dieser Bereich von 5 % bis 95 % des effektiven Ladezustands der HV-Batterie als 0% bis 100% auf einer Ladezustandsanzeige angezeigt werden.

Wie auch bei der Wechselstromaufladung kann der Bediener einen maximal gewünschten Ladezustand (SoC) der Batterie vorgeben, um diese zu schonen und die Lebensdauer zu erhöhen.

Wenn ein Ladekabel am Kran angeschlossen ist, untersagt die Kransteuerung den Start des Verbrennungsmotors, um unbeabsichtigte Beschädigungen zu verhindern.

Eine Smart Control Unit (SCU) ist ein zusätzlicher Controller für das HV - System und bildet eine intelligente Steuerungseinheit zur Steuerung, Überwachung und Optimierung des Batteriebetriebs, der Sicherheitsfunktionen, der Leistungselektronik der Antriebe und des Generators und des Thermomanagementsystems. Die SCU kann die für das System benötigte Niedervoltspannung (zum Beispiel 24 V) über die HV - Batterie und DC/DC-Wandlung sicherstellen, wenn ein Ladevorgang (AC oder DC) der HV - Batterie stattfindet, oder wenn eine Batteriekonditionierung durchgeführt wird, auch wenn die Niederspannungsversorgung des Kranes nicht aktiv ist.

Wenn zum Beispiel der Zündschalter des Mobilkrans ausgeschaltet ist und ein AC- oder DC-Ladevorgang aktiv ist und/oder wenn eine Batteriekonditionierung geplant ist, können das Oberwagen-Display ODM und das Unterwagen-Display CDM automatisch die Batterie-Informationen anzeigen. In diesem Betriebszustand sind vorzugsweise alle anderen Kranfunktionen gesperrt. Während des AC- oder DC-Ladevorgangs und während einer Batteriepflege oder Batteriekonditionierung bleiben Oberwagen-Display ODM und Unterwagen-Display CDM vorzugsweise automatisch an und zeigen die relevante Ladung und Batterie-Statuswerte, selbst wenn der Mobilkran ausgeschaltet ist.

Oberwagen-Display ODM und/oder Unterwagen-Display CDM können während eines Ladevorgangs eine oder mehrere oder alle der folgenden Informationen auf ihrem Bildschirm anzeigen:
- Ladeleistung (kW)
- Ladezustand (SoC, State of Charge)
- Zielladezustand (bis zu welchem Prozentsatz der Maximalladung aufgeladen wird)
- erwartete/berechnete Zeit, wann der Zielladezustand erreicht werden wird
- Zielzeit (des Tages) wann eine Batteriekonditionierung oder Batteriepflege abgeschlossen sein wird (wenn aktiviert)
- Ein Warnsymbol, um anzuzeigen, dass der Verbrennungsmotor ICE nur gestartet werden kann, nachdem der Ladestecker entfernt wurde

Der Ladezustand (SoC) quantifiziert dabei die verbleibende verfügbare Kapazität einer Batterie zu einem bestimmten Zeitpunkt, beispielsweise auch in Bezug auf einen bestimmten Alterungszustand (SoH - State of Health). Der Ladezustand (SoC) kann als Prozentsatz ausgedrückt werden (0% = leer; 100% = voll). Eine alternative Form dieser Anzeige kann auch die Entladungstiefe (DoD - Depth of Discharge) sein, die angibt, wieviel Prozent der Nennkapazität der Batterie noch entnommen werden kann, ohne die Lebensdauer zu verringern.

Vorzugsweise ist es nicht möglich den Motor ICE zu starten, wenn die HV-Batterie über externe Ladequelle geladen wird oder wenn ein AC- oder DC-Ladekabel mit dem Mobilkran verbunden ist, oder wenn ein Ladestecker an dem Mobilkran eingesteckt ist. Es ist möglich, dass der Motor ICE automatisch zum Beispiel von einer Steuerung gestoppt wird, wenn ein AC- oder DC-Ladekabel mit dem Mobilkran verbunden wird, oder wenn ein Ladestecker an dem Mobilkran eingesteckt wird. Hierzu kann auch ergänzend eine Geschwindigkeitsüberprüfung durchgeführt werden, d.h. der Motor wird zum Beispiel nur dann gestoppt, wenn die Geschwindigkeit des Mobilkrans unterhalb einer vorgegebenen Geschwindigkeit liegt. Die vorgegebene Geschwindigkeit kann zum Beispiel 8 km/h sein. Hierdurch kann zum Beispiel ein unbeabsichtigtes Ausschalten des Motors verhindert werden, wenn der Mobilkran mit einer Geschwindigkeit oberhalb dieser vorgegebenen Geschwindigkeit bewegt wird.

Es ist möglich, dass eine Bedienperson des Mobilkrans den Ladevorgang jederzeit manuell unterbricht, indem zum Beispiel ein entsprechender Schalter betätigt wird.

Um die bestmöglichen oder vollen Lade- und Entlade-Kapazitäten der Batterie zur Verfügung zu haben, sollte die Batterie des Mobilkrans innerhalb bestimmter Temperaturgrenzen betrieben werden. Beispielsweise sollte der Temperaturbereich T, in welchem die Batterie betrieben wird, zwischen 5 °C und 30 °C liegen, also 5 °C < T < 30 °C.

Vorteilhaft ist ein Batterie-Konditionierungs-Modus vorgesehen, um zum Beispiel eine Startzeit zu definieren, wann der Kran betriebsbereit, ist oder sein soll, mit einer Batterie oder Batterien zum Zeitpunkt dieser Startzeit, die sich auf einer optimalen oder guten Temperatur, zum Beispiel im oben genannten Temperaturbereich T, befinden. Ist der Batterie-Konditionierungs-Modus aktiviert, kann zum Beispiel eine gewünschte "Mobilkran-Startzeit" angegeben werden, wobei dann ein Temperatur-Management-System (TMS, thermo-management-system) des Mobilkrans die Konditionierung, also zum Beispiel das Kühlen oder Aufwärmen, der Batterien bei einer vorausberechneten Zeit startet, um die gewünschten optimalen oder perfekten Bedingungen für die Batterie(n) zu dieser "Mobilkran-Startzeit" zu erhalten. Dabei können von dem Temperatur-Management-System TMS die Umgebungstemperatur und der momentane allgemeine Zustand oder Betriebszustand der Batterie berücksichtigt werden. Der Batterie-Konditionierungs-Modus wird ebenfalls vorgesehen, um zu einer vorgegebenen Zeit eine optimale Batterietemperatur zur Ladung dieser zu erreichen.

Das Oberwagen-Display ODM und/oder Unterwagen-Display CDM können zum Beispiel als Touchscreens ausgebildet sein, oder andere an sich bekannte Eingabemöglichkeiten aufweisen. Mittels dieser Eingabemöglichkeiten können die folgenden Batteriekonditionierungsparameter von einer Bedienperson eingegeben werden:
- Zeitpunkt des erwarteten Starts des Kranbetriebs, oder der Ladung
- Aktivierung der Batteriekonditionierung (an/aus)

### 1.2.Laden mit Generator (ICE)

Das Aufladen der HV-Batterie des Mobilkrans mit einem Generator des Mobilkrans, welcher direkt oder indirekt von einem (Diesel-)Motor des Mobilkrans angetrieben wird, kann stationär oder im Fahrbetrieb erfolgen.

Beim stationären Aufladen der Batterie (der Mobilkran bewegt sich nicht und steht auf seinen Reifen oder Abstützelementen) ist im Allgemeinen beabsichtigt die Batterie so schnell wie möglich aufzuladen, wobei normalerweise kein Kranbetrieb erfolgt. Beim Aufladen der Batterie im Fahrbetrieb wird allgemein beabsichtigt möglichst mit "bestgeladener" Batterie, also zum Beispiel vollständig aufgeladener Batterie oder mit einer Aufladung entsprechend einer gewünschten und zum Beispiel von einer Bedienperson vorgegebenen Ladungsmenge SoC, am Einsatzort des Mobilkrans anzukommen.

Eine Bedienperson kann einen solchen Aufladevorgang jederzeit unterbrechen und zu einer anderen Betriebsart wechseln.

### 1.2.1 Stationäres Aufladen

Bei einem Aufladevorgang der HV - Batterie mit einem Generator kann der Generator mit dem Motor über einen Nebenabtrieb PTO gekoppelt werden, wobei das Verteilergetriebe zum Beispiel so eingestellt werden kann, dass der Nebenabtrieb PTO aktiv und der Fahrzeugantrieb im Leerlauf ist.

Das Antriebsgetriebe kann auf ein optimales Übersetzungsverhältnis eingestellt werden, zum Beispiel 16. Gang, um den Generator bei einer effizienten Geschwindigkeit zu betreiben.

Der Motor ICE wird vorzugsweise bei einer effizienten Ladegeschwindigkeit betrieben, wie zum Beispiel 1.450 Umdrehungen pro Minute (rpm).

Der Generator wird in einem Drehmoment-Modus betrieben, wobei das Drehmoment von einer Steuerung des Systems so festgelegt oder eingestellt wird, dass es zu einem zulässigen Ladestrom der HV - Batterie passt, vorzugsweise basierend auf oder abhängig von dem Ladezustand SoC der HV - Batterie und der Batterie- oder Systemtemperatur.

Optional kann eine Steuerung auch so ausgelegt werden, dass ein sparsamerer Ladebetrieb erfolgt, wobei die Ladezeitdauer verlängert wird. Zum Beispiel kann der (Diesel-)Motor ICE bei einer geringeren Drehzahl, wie zum Beispiel 1.000 Umdrehungen pro Minute, betrieben werden.

### 1.2.2. Laden während des Fahrbetriebs

Es ist möglich, die Batterie aufzuladen, während der Kran bewegt wird, also im Fahrbetrieb ist. Dabei wird der Generator von dem Verbrennungsmotor ICE angetrieben, um die Batterie aufzuladen.

Eine Bedienperson kann zwischen den nachfolgend beschriebenen Untermodi (maximale Ladezeitoptimierte Aufladung; ECO Aufladung; Drive Pro) wählen und diese auch während des Fahrbetriebs wechseln.

Das Verteilergetriebe wird so eingestellt, dass der Nebenabtrieb PTO aktiv ist und der Mobilkran gleichzeitig angetrieben oder bewegt werden kann. Dies kann mit einem normalen Antrieb beziehungsweise einer normalen Übersetzung oder einem Geländegang beziehungsweise einer Geländeübersetzung (off-road gear) erfolgen. Dabei kann das Antriebsgetriebe wie gewöhnlich betrieben werden.

Der Nebenabtrieb PTO kann direkt mit dem Antriebsstrang gekoppelt werden, wobei die Generatorgeschwindigkeit linear mit der Antriebsgeschwindigkeit des Mobilkrans gekoppelt ist.

Der Generator kann in einem Drehmoment-Modus betrieben werden, wobei das Drehmoment von einer Steuerung des Systems so festgelegt oder eingestellt werden kann, dass es zu einer Krangeschwindigkeit, der Nutzung der Motorleistung, der Stellung des Gaspedals, dem aktiven Gang des Antriebsgetriebes und/oder einem zulässigen Ladestrom der HV-Batterie passt, vorzugsweise basierend auf oder abhängig von dem Ladezustand SoC der HV - Batterie und der Batterie- oder Systemtemperatur. Dabei kann berücksichtigt werden, welcher der nachfolgend beschriebenen Modi eingestellt ist.

Das Generator - Drehmoment kann auf 0 Nm gesetzt werden, wenn das ABS oder Bremsregelsystem aktiv ist.

Das Generator-Drehmoment kann positiv oder negativ eingestellt werden, wobei das System auch in der Lage ist, eine Antriebsleistung vom Generator auf den Antriebsstrang des Mobilkrans zu übertragen. Der Generator kann also von dem Motor angetrieben werden, um die HV - Batterie aufzuladen und kann in einer anderen Betriebsart als Elektromotor wirken, welcher von der HV - Batterie mit Energie versorgt wird, um seinerseits den Antriebsstrang anzutreiben (Antriebsunterstützung), um so zum Beispiel als Verstärkung oder Boost für den Verbrennungsmotor zu wirken, wenn zusätzliche Motorleistung benötigt wird, wie zum Beispiel bei einem Überholvorgang oder einem Bergantrieb.

### 1.2.2.1. Modus: vollständige oder maximale Aufladung

Im Modus "vollständige oder maximale Aufladung" ist beabsichtigt, die Batterie so schnell wie möglich auf einen beabsichtigten oder vorgegebenen vollständigen oder Teil-Ladezustand SoC aufzuladen.

Eine Bedienperson kann diesen Modus stoppen oder zu einem anderen Modus wechseln, wenn sich der Kran nicht bewegt.

In diesem Modus ist die oben beschriebene Antriebsunterstützung ausgeschaltet.

Der Generator wird bei maximal möglichem Drehmoment betrieben und nimmt Leistung auf während der Beschleunigung, dem Antrieb, dem Rollen und dem Bremsen des Mobilkrans, solange die Nutzung der Leistung des Verbrennungsmotors ICE unterhalb eines vorgebbaren spezifischen Wertes liegt, zum Beispiel < 90 %.

Die maximal mögliche Antriebsleistung des Mobilkrans bleibt unverändert, wenn die Nutzung der Leistung des Verbrennungsmotors für den Generator oberhalb eines spezifischen Wertes, zum Beispiel oberhalb von 90 %, liegt, wobei das Generatordrehmoment dann schrittweise bis auf 0 Nm zurückgefahren werden kann oder wird.

Der Nebenabtrieb PTO wird abgeschaltet beziehungsweise vom Antriebsstrang getrennt, wenn der Zielladezustand SoC der Batterie erreicht ist.

Optional können adaptive Rekuperations-Modi von einer Bedienenperson eingestellt werden. Beispielsweise kann von einer Bedienenperson vorgegeben werden, wann oder bis zu welchem Grad eine Rekuperation realisiert werden soll.

### 1.2.2.2. Modus: ECO Aufladung

Im Modus "ECO Aufladung" soll eine gute Balance oder ein gutes Verhältnis zwischen der Ladezeit der Batterie und dem Verbrauch des Verbrennungsmotors ICE eingestellt werden.

In diesem Modus ist die oben beschriebene Antriebsunterstützung ausgeschaltet.

Der Generator nimmt Leistung während des Rollens und Bremsens des Mobilkrans auf und wird mit dem maximal möglichen Drehmoment betrieben.

Der Generator wird während des Beschleunigens und Fahrens des Mobilkrans mit konstanter Geschwindigkeit mit einem geringeren Drehmoment (oder ohne Drehmoment) betrieben, und nimmt weniger Leistung auf.

Die maximal mögliche Antriebsleistung des Mobilkrans bleibt unverändert, wenn die Nutzung der Leistung des Verbrennungsmotors für den Generator oberhalb eines spezifischen Wertes, zum Beispiel oberhalb von 90 %, liegt, wobei das Generatordrehmoment dann schrittweise bis auf 0 Nm zurückgefahren werden kann oder wird.

Der Nebenabtrieb PTO wird abgeschaltet beziehungsweise vom Antriebsstrang getrennt, wenn der Zielladezustand SoC der Batterie erreicht ist.

Optional können adaptive Rekuperations-Modi von einer Bedienenperson eingestellt werden. Beispielsweise kann von einer Bedienperson vorgegeben werden, wann oder bis zu welchem Grad eine Rekuperation realisiert werden soll.

### 1.2.2.3. Modus: Balance (Drive Pro)

Im Modus Balance (Drive Pro) soll eine gute Balance zwischen der Ladezeit der Batterie und dem Fahrverhalten des Mobilkrans hergestellt werden. Die Elastizität des Kranantriebs bei mittlerer bis hoher Geschwindigkeit wird erhöht. Die Systemleistung des Antriebsstrangs wird erhöht.

Der Generator nimmt Leistung während des Beschleunigens, Fahrens, Rollens und Bremsens des Mobilkrans auf und wird mit dem maximal möglichen Drehmoment betrieben, solange die Nutzung der Verbrennungsmotorleistung unterhalb eines spezifischen vorgebbaren Wertes von zum Beispiel 90 % liegt.

Der Generator arbeitet als Motor und entnimmt Energie aus der Batterie und liefert Drehmoment für den Antriebsstrang während der Beschleunigung und der Fahrt mit einer hohen Motornutzung, zum Beispiel > 90 %, und einem hohen Gaspedalzustand, zum Beispiel zu > 90 % durchgetreten. Diese Funktion ist jedoch nicht beim Fahren mit Tempomat aktiv.

Das vom Generator an den Antriebsstrang gelieferte Unterstützungsdrehmoment wird von dem System basierend auf dem Ladezustand, der Systemtemperatur, der Gaspedaleinstellung und der Nutzung des Verbrennungsmotors festgelegt.

Die maximale Antriebsleistung des Mobilkrans wird durch den als Elektromotor wirkenden Generator erhöht. Wenn die Krangeschwindigkeit oberhalb eines spezifischen vorgebbaren Wertes ist, zum Beispiel größer als 84 km/h, wird das Generatorunterstützungsdrehmoment auf 0 Nm zurückgefahren.

Der Nebenabtrieb PTO wird nicht deaktiviert, wenn der Zielladezustand SoC erreicht wird.

Das System gibt eine Warnmeldung aus, wenn die Antriebsunterstützung begrenzt wird, zum Beispiel aufgrund des Ladezustands SoC, der Temperatur, oder anderer Parameter.

### 2. Kranbetrieb

Die Hydraulikpumpe (z.B. Axialkolben mit variabler Verdrängung) des hydraulischen Systems des Oberwagens des Mobilkrans wird durch einen Elektromotor angetrieben, welcher vorzugsweise ein HV - Wechselstrom - Synchronmotor ist. Die variable Verdrängung wird durch ein hydraulisches Last - Erfassungs - System gesteuert. Eine weitere Ausführung wäre eine Hydraulikpumpe mit konstantem Volumen, bei der das benötigte Volumen über die Drehzahl des Elektromotors geregelt wird.

Im Status aktiver Kranbetrieb wird beispielsweise wie folgt vorgegangen:
- Der Motor wird abgeschaltet, wenn kein Kranantrieb während eines spezifischen vorgegebenen Zeitraumes von zum Beispiel 3 Sekunden aktiviert ist oder wird, und alle hydraulischen Bremsen während eines spezifischen vorgegebenen Zeitraumes von zum Beispiel 1 Sekunde in Bremsposition sind.
- Der Motor läuft im Leerlauf, zum Beispiel bei z.B. 300 oder 500 Umdrehungen/min, um den Systemdruck zur Verfügung zu stellen, zum Beispiel um die Bremsen zu öffnen, Ventile zu aktivieren, etc., wenn der Kranantrieb aktiv ist und keine Anfangsgeschwindigkeit vorgegeben oder gespeichert ist.
- Wenn eine Anfangsgeschwindigkeit vorgegeben oder gespeichert ist, läuft der Motor bei dieser Geschwindigkeit, wenn der Kranantrieb aktiv ist.
- Die Geschwindigkeit kann von einer Bedienperson erhöht oder verringert werden und der von der Bedienperson vorgegebene Wert wird für den momentanen Arbeitsbetrieb gespeichert, bis der Kran abgeschaltet wird (Betriebsmodus aus).
- Die Geschwindigkeit kann durch ein Pedal erhöht werden, jedoch nicht durch ein Pedal verringert werden. Das Pedal bewirkt nur eine Erhöhung der Geschwindigkeit, wenn die Pedalposition weiter gedrückt wird, als dies der aktuellen Geschwindigkeit entspricht (Pedalposition > momentane Geschwindigkeit). Dieser Geschwindigkeitswert wird nicht gespeichert, der Kran kehrt also zum letzten gespeicherten Geschwindigkeitswert zurück, wenn das Pedal wieder losgelassen wird.
- Das System berechnet die maximal verfügbare Batterieleistung für den Motor basierend auf SoC, Temperaturen, etc. Diese so ermittelte maximale Leistung, inklusiv der Bremsleistungskapazität, wird hydraulisch berücksichtigt, indem die Einstellpunkte der jeweiligen hydraulischen Systeme falls erforderlich, also bei zu geringer zur Verfügung stehenden maximalen Batterieleistung, reduziert werden (ein Einstellpunkt ist der Steuerbefehl von einer Bedienperson, zum Beispiel mittels Joystick). Dies trifft hauptsächlich zu, wenn mehr als ein Hauptantrieb von einer Bedienperson angefordert oder aktiviert wird.
- Die Nutzung der Batterieleistung sowie die verbleibende Leistung wird auf einer Anzeige (UI, User Interface) der Kransteuerung angezeigt.
- Eine automatische Geschwindigkeitssteuerung kann wie folgt funktionieren: Die benötigte hydraulische Leistung wird von der Kransteuerung (CCS) berechnet. Hieraus wird die benötigte Geschwindigkeit des Elektromotors berechnet. Diese benötigte Geschwindigkeit ist Grundlage der Berechnung für die Ansteuerung des Inverters des Elektromotors, um die berechnete erforderliche Geschwindigkeitsänderung durch entsprechende Ansteuerung des Elektromotors zu realisieren. Der Einstellpunkt der Kransteuerung (CCS) ist also die benötigte Geschwindigkeit oder Geschwindigkeitsänderung des Elektromotors, um die vorgegebene hydraulische Leistung zu erreichen.
- Hydropumpe kann zum Beispiel nur elektrisch angetrieben werden (Batterie und/oder externe Stromquelle und/oder Generator), und kann zu beliebiger Zeit mit beliebiger Drehzahl vom Elektromotor angetrieben werden
- Elektromotor aus, wenn z.B. 3s kein Betrieb und Bremsen der Kran - Triebwerke aktiv
- Elektromotor Leerlaufgeschwindigkeit, wenn Systemdruck aufrechterhalten werden soll (Krantriebwerk aktiv ohne Leistungsanforderung)
- (Peak)Betrieb Elektromotor in Abhängigkeit von maximaler Entladeleistung der Batterie (abhängig zum Beispiel von Ladezustand SoC, Temperatur, ...)
- Setpoint/operator command wird nicht 1:1 umgesetzt, sondern nur in Abhängigkeit von peak power capacity Batterie (also evtl. abgeregelt)

### 2.1. ICE Modus (ECO diesel)

Dieser Modus wird automatisch aktiviert, wenn die Bedienperson in den Kranbetrieb schaltet, während das Laden durch einen Generator aktiv ist. Dieser Modus kann auch manuell aktiviert werden.

Das Verteilergetriebe wird auf aktiven Nebenabtrieb und Leerlauf geschaltet.

Das Antriebsgetriebe wird auf ein optimales Übersetzungsverhältnis, zum Beispiel 16. Gang, geschaltet, um den Generator bei einer effizienten Geschwindigkeit zu betreiben.

In diesem Modus ist es möglich, den Verbrennungsmotor ICE zu starten.

Der Kranbetrieb erfolgt batteriebetrieben mit der Möglichkeit die Batterie wieder mit dem Generator aufzuladen. Beispielsweise kann die Batterieladung beim Start des Betriebs unterhalb oder gleich 20 % SoC liegen und bei Ende des Betriebs größer oder gleich 90 % SoC sein.

Es wird ein optisches und/oder akustisches Signal ausgegeben, wenn ein Wiederaufladen der Batterie benötigt wird. Der Start des Verbrennungsmotors ICE erfolgt aus Sicherheitsgründen nur dann, wenn dieser von einer Bedienperson bestätigt wird. Falls ausreichende Sicherheitsfunktionen vorhanden sind, kann dieser Vorgang automatisiert werden oder sein.

Falls eine Fernsteuerung aktiv ist, ist das Starten des Motors möglich, wobei ein Warnsignal, wie zum Beispiel ein Hupsignal, aktiviert wird, wenn der Start des Verbrennungsmotors ICE angefordert wird.

Wenn die Steuerung aus dem Führerhaus aktiviert ist oder wird, läuft der Verbrennungsmotor weiter, und der Generator wird auf ein niedrigeres Drehmoment, oder 0 Nm gesetzt.

### 2.2. Batteriemodus

Im Batteriemodus ist der Start des Verbrennungsmotors ICE nicht möglich.

Es wird eine optische und/oder akustische Warnung an die Bedienperson ausgegeben, wenn der Ladezustand SoC der Batterie unter einen vorgegebenen ersten Grenzwert, zum Beispiel unter 15 %, fällt. Die Systemleistung wird herabgesetzt, jedoch bleibt der Mobilkran voll funktionsfähig.

Eine nächste (zweite) Warnung wird ausgegeben, wenn der Ladezustand SoC der Batterie unter einen vorgegebenen zweiten Grenzwert, zum Beispiel unter 8 % SoC, fällt. Die Systemleistung wird begrenzt. Zum Beispiel ist keine Höchstgeschwindigkeit des Elektromotors möglich.

Eine weitere (letzte) Warnung wird ausgegeben, wenn der Ladezustand SoC der Batterie unter einen vorgegebenen dritten Grenzwert, zum Beispiel unter 2 % SoC, fällt. Der Kranbetrieb wird in einem stabilen Zustand gestoppt. Die Hydraulik wird nur noch im Leerlauf betrieben.

Wenn eine Fernsteuerung aktiv ist, wird ein Warnsignal, wie zum Beispiel ein Hupsignal, aktiviert, um die Bedienperson zu informieren, dass die Leistung des Mobilkrans herabgesetzt oder gestoppt wurde.

### 2.3. Batteriemodus (Kabelbetrieb AC oder DC)

Im Batteriemodus (Kabelbetrieb AC oder DC) ist der Start des Verbrennungsmotors ICE nicht möglich.

Dieser Modus wird automatisch aktiviert, wenn ein Ladekabel (AC oder DC) mit dem Mobilkran verbunden ist oder wird, oder ist.

Es wird ein kontinuierliches Laden mit geringerer Hysterese durchgeführt, wenn ein maximaler Ladezustand SoC der Batterie erreicht ist.

Ein optisches und/oder akustisches Warnsignal wird ausgegeben, wenn der Ladezustand SoC der Batterie unter einen vorgegebenen ersten Grenzwert, zum Beispiel unterhalb von 15 % SoC, fällt und die Systemleistung wird verringert oder begrenzt, jedoch ist der Mobilkran vollständig funktionsfähig.

Eine nächste (zweite) Warnung wird ausgegeben, wenn der Ladezustand SoC der Batterie unter einen vorgegebenen zweiten Grenzwert, zum Beispiel unter 8 %, fällt. Die Systemleistung wird begrenzt. Zum Beispiel ist keine Höchstgeschwindigkeit des Elektromotors möglich.

Eine weitere (letzte) Warnung wird ausgegeben, wenn der Ladezustand SoC der Batterie unter einen vorgegebenen dritten Grenzwert, zum Beispiel unter 2 %, fällt. Der Kranbetrieb wird in einem stabilen Zustand gestoppt. Die Hydraulik wird nur noch im Leerlauf betrieben.

Wenn eine Fernsteuerung aktiv ist, wird ein Warnsignal, wie zum Beispiel ein Hupsignal, aktiviert, um die Bedienperson zu informieren, dass die Leistung des Mobilkrans herabgesetzt oder gestoppt wurde.

### 2.4. Notbetrieb

Der Modus Notbetrieb wird eingeschaltet, wenn die HV-Batterie nicht funktionsfähig ist, also die elektrische Haupt-Energieversorgung ausgefallen ist, oder aufgrund von zu niedrigen oder zu hohen Batterietemperaturen nicht leistungsfähig ist. In diesem Modus ist der Kranbetrieb nur eingeschränkt möglich.

Ein Systemstart und Betrieb ist ohne HV - Batterie möglich und wird durch das LV (z.B. 24V) Bordnetz, oder durch eine angeschlossene Ladestromquelle unterstützt. Das HV-System wird hierzu von über 24V Bordnetz des Kranes gespeisten DCDC Spannungswandler mit erforderlicher Hochspannung versorgt und vorgeladen, um den Betrieb des Generators zu ermöglichen. Alternativ wird über eine an die Ladeschnittstelle des Kranes angeschlossene Ladestromquelle der Onboard-Charger (OBC) mit Leistung versorgt, der wiederum das HV-System vorlädt und somit den Betrieb ermöglicht.

Das Verteilergetriebe wird auf aktiven Nebenabtrieb PTO und Leerlauf gesetzt.

Das Antriebsgetriebe wird auf ein optimales Übersetzungsverhältnis, zum Beispiel 16. Gang, geschaltet, um den Generator bei einer effizienten Geschwindigkeit zu betreiben.

Ein stabiler Kranbetrieb ist möglich, wobei dieser von dem Generator mit im Vergleich zur HV - Batterie begrenzter Leistung unterstützt oder versorgt wird. Das Hochlaufen (ramp) der einzelnen Kranfunktionen ist länger und die Antriebsgeschwindigkeit ist reduziert. Alle Kranfunktionen sind somit möglich, jedoch unter Leistungsbegrenzung und/oder mit Hochlaufbeschränkung.

Vorzugsweise sind Bewegungen in stabile Zustände des Mobilkrans möglich.

Der Notbetrieb wird ebenfalls genutzt, um HV-Batterien, die aufgrund von zu niedrigen oder zu hohen Batterietemperaturen nicht leistungsfähig oder deaktiviert sind, durch das im Notbetrieb betriebene Thermomanagementsystem zu heizen bzw. zu kühlen und somit in einen zum Betrieb des Kranes erforderlichen Betriebstemperaturbereich zu bringen.

### Bezugszeichenliste:

- BatteryHV: Batteriesystem aus Einzelbatteriepaketen Li-Ion inkl. Batteriemanagement und Kühlkreislauf
- Battery Pump: elektrische Kühlwasserpumpe Batteriekreislauf
- Carrier: Unterwagen des Kranes
- CCS: Crane Control System bestehende Kransteuerung vom dieselhydraulischen "Standardkran"
- CDM: Unterwagendisplay
- Charger: On-Board-Charger AC 3Phasen auf HV DC (Anschluss an externes AC-Netz)
- Compressor: HV Kühlmittelkompressor Klimaanlage Oberwagen
- DC Interface: Schnittstelle zum Anschluss des HV DC Netzes an externen DC-Schnelllader
- DCDC: Spannungswandler HV DC auf Niederspannung DC, bidirektional
- Generator: HV Permanentmagnet- Synchronmotor als Generator
- HVDU: HV distribution unit - Verteiler- und Sicherungseinheit
- ICE: Dieselmotor
- Inverter: HV-Inverter zur Motor- oder Generatoransteuerung
- LVDU: Niederspannungsverteiler
- Motor: HV Permanentmagnet- Synchronmotor
- ODM: Oberwagendisplay
- PTO: Power-take-off (Nebenabtrieb) am Verteilergetriebe
- SCU: zusätzlicher Controller für das HV-System
- Slipring: Schleifringkörper zur Übertragung von HV, Niedervolt, Signalen und CAN-Bus
- SoC: State of charge - Ladestand der HV Batterie
- Superstructure: Oberwagen des Kranes
- TMS: Thermo-Management-System

## Patentansprüche

1. Verfahren zum Aufladen einer Batterie eines Mobilkrans im Fahrbetrieb des Mobilkrans, wobei der Mobilkran einen Verbrennungsmotor aufweist, dessen Energie zum Antrieb des Mobilkrans und zum Laden der Batterie des Mobilkrans mittels eines Generators verwendet wird, **dadurch kennzeichnet, dass** der gewünschte Ladezustand (SoC) der Batterie bei Ankunft des Mobilkrans am Zielort vorgegeben wird und die Ladeleistung, welche vom Verbrennungsmotor für das Laden der Batterie benötigt wird, so berechnet und dem Generator zur Verfügung gestellt wird, dass die Batterie ausgehend von ihrem momentanen Ladezustand so aufgeladen werden kann, dass der gewünschte Ladezustand der Batterie bei der berechneten Ankunftszeit des Mobilkrans vorliegt.

2. Verfahren nach Anspruch 1, wobei der gewünschte Ladezustand (SoC) der Batterie bei Ankunft des Mobilkrans am Zielort bei 80%, 90% oder 100 % liegt.

3. Verfahren zum Betreiben eines Kranes mit mindestens einem batterieelektrischen Hochvoltspeicher im Notbetrieb, wobei der Hochvoltspeicher z.B. aufgrund von zu kalter oder zu hoher Batterietemperatur nicht, oder nicht optimal leistungsfähig ist, wobei das Hochvoltsystem mittels des Niedervoltsystems und/oder einer externen Leistungseinspeisung auf einen Onboard-Charger (kraninternes Ladegerät) nach Spannungswandlung (DCDC) auf zum Betrieb des Hochvoltsystems erforderliche Hochvolt-Gleichspannung vorgeladen und in Betrieb genommen wird, ohne die Hochvoltbatterie hierfür zu aktivieren.

4. Verfahren nach dem vorhergehenden Anspruch, wobei die Hochvoltbatterie durch ein Hochvolt-Thermo-Management-System erwärmt oder gekühlt wird, nachdem das Hochvoltsystem ohne Zuschalten der Hochvoltbatterie vorgeladen und in Betrieb genommen wurde, wobei die hierfür erforderliche Energie dem Hochvoltsystem über einen kraninternen, durch einen Verbrennungsmotor (ICE) angetriebenen Generator, oder über eine externe Leistungsversorgung, die mit einem kraninternen Ladegerät (Onboard-Charger) verbunden ist, zur Verfügung gestellt wird.

5. Mobilkran mit einer Batterie, einem Generator, mit welchem die Batterie aufgeladen werden kann, und einem Verbrennungsmotor (ICE), mit welchem der Generator angetrieben und der Mobilkran bewegt werden kann, **gekennzeichnet durch** eine Steuereinheit zur Durchführung des Verfahrens nach einem der vorhergehenden Ansprüche.
